Europäisches Patentamt

European Patent Office

Office européen des brevets

(19)

(11) Numéro de publication: **0 305 227**
**A1**

(12) ## DEMANDE DE BREVET EUROPEEN

(21) Numéro de dépôt: **88401742.7**

(22) Date de dépôt: **05.07.88**

(51) Int. Cl.⁴: **F 16 G 5/16**

(30) Priorité: **13.08.87 FR 8711529**

(43) Date de publication de la demande:
**01.03.89 Bulletin 89/09**

(84) Etats contractants désignés:
**BE DE ES GB IT LU NL**

(71) Demandeur: **HUTCHINSON**
**2 rue Balzac**
**F-75008 Paris (FR)**

(72) Inventeur: **Simon, Jean-Michel**
**86, rue de Châtillon**
**F-92140 Clamart (FR)**

(74) Mandataire: **Orès, Bernard et al**
**Cabinet ORES 6, Avenue de Messine**
**F-75008 Paris (FR)**

(54) **Courroie trapézoidale perfectionnée.**

(57) Courroie sans fin comportant une armature longitudinale constituée par un organe résistant à la tension ou une pluralité de tels organes comme des câbles(C) notamment en métal, en fibres de verre ou en tout matériau synthétique présentant une forte résistance à la tension, des éléments transversaux (60) de forme générale trapézoïdale présentant une base et deux ailettes latérales (61, 62) inclinées sur ladite base avec une masse d'élastomère qui solidarise lesdits éléments transversaux entre eux et avec l'armature longitudinale.

Les éléments transversaux (60) sont conformés ou sont munis de moyens (63) tels que, en fonctionnement, la résultante des forces de réaction d'appui des flasques de poulies sur lesdits éléments transversaux (60) soit très proche de la ligne moyenne de transmission d'effort de l'armature longitudinale qui constitue sensiblement la fibre neutre de la courroie.

Applications : variateurs de vitesse, embrayages et autres mécanismes de l'Industrie automobile, notamment.

FIG. 8

EP 0 305 227 A1

**Description**

## "COURROIE TRAPEZOIDALE PERFECTIONNEE"

L'invention a pour objet une courroie sans fin à section trapézoïdale notamment, mais non exclusivement, destinée à équiper des variateurs de vitesse à poulies à gorge, ou des dispositifs d'embrayage pour l'industrie automobile.

L'invention vise plus particulièrement une telle courroie trapézoïdale sans fin du type comportant une armature longitudinale constituée par un organe résistant à la tension, ou une pluralité de tels organes, comme des câbles, notamment en métal, en fibres de verre ou en tout matériau synthétique présentant une forte résistance à la traction et des éléments transversaux métalliques, ou en tout autre matériau présentant une résistance à la compression, avec une masse d'élastomère qui solidarise les éléments transversaux entre eux et avec l'armature longitudinale.

Lorsqu'elle est utilisée en tant que courroie de transmission de puissance, par exemple dans un variateur de vitesse, une telle courroie est soumise à d'importants efforts de compression latéraux exercés par les flasques des poulies avec lesquelles elle coopère et, dans une courroie de ce type comme divulguée dans FR-A-2 453 035 c'est-à-dire dans laquelle les éléments transversaux sont des plaquettes à base pleine et ailettes latérales, la courbe représentative des réactions d'appui des flasques des poulies sur la plaquette est fortement dissymétrique. Une telle dissymétrie des réactions d'appui, dûe à des raideurs différentes de la base et des ailettes de la plaquette a pour conséquence que les forces de friction latérales sur les flancs des plaquettes, proportionnelles aux forces de réaction d'appui et, par suite, les forces d'entraînement de la courroie qui résultent des forces de friction sont elles aussi à distribution dissymétrique par rapport à l'armature constituée par une nappe de câblés. Le bary centre des forces de friction étant ainsi distant du centre d'application de l'effort de traction desdits cablés, suivant une direction perpendiculaire à celle de l'effort de traction, un moment parasite tend à renverser les plaquettes introduisant un effet néfaste au bon fonctionnement de la courroie. La durée de vie de cette dernière est alors très notamment inférieure à celle que l'on attend d'elle dans la plupart des mécanismes qu'elle équipe, notamment les variateurs de vitesse.

C'est, par conséquent, un but de l'invention de fournir une courroie trapézoïdale perfectionnée du type mentionné dont la durée de vis soit notablement plus grande que celle des meilleures courroies connues préconisées dans l'art antérieur.

Ce but est atteint, par la présente invention, dans une courroie sans fin comportant une armature longitudinale constituée par un organe résistant à la tension ou une pluralité de tels organes comme des câbles, notamment en métal, en fibres de verre ou en tout matériau synthétique présentant une forte résistance à la tension, des éléments transversaux de forme générale trapézoïdale présentant une base et deux ailettes latérales inclinées sur ladite base en métal ou en tout autre matériau présentant une bonne résistance à la compression, avec une masse d'élastomère qui solidarise lesdits éléments transversaux entre eux et avec l'armature longitudinale, par le fait que les éléments transversaux sont conformés ou sont munis de moyens tels que, en fonctionnement, la résultante des forces de réaction d'appui des flasques de poulie sur lesdits éléments transversaux soit très proche de la ligne moyenne de transmission d'effort de l'armature longitudinale qui constitue sensiblement la fibre neutre de la courroie.

Le moment de renversement des plaquettes ou des éléments transversaux que l'on constatait sur les courroies des réalisations connues est ainsi considérablement diminué, voire annulé, avec pour conséquence une très forte augmentation de la durée de vie de la courroie.

Une première série de modes de réalisation de la présente invention prévoit de rendre la base de chaque élément transversal ou plaquette de la courroie plus facilement déformable en conformant lesdites plaquettes de manière appropriée.

Une seconde série de modes de réalisation prévoit de rapporter sur chaque plaquette des moyens permettant de mieux répartir les efforts de compression et, le cas échéant, de diminuer localement les efforts de friction, comme par exemple à l'aide d'une garniture en matériau souple.

Une troisième série de réalisations prévoit de compenser la tendance à la flexion des ailettes de chaque plaquette par des moyens d'entretoise disposés entre lesdites ailettes.

Alors que des courroies selon les première et troisième séries de réalisation sont particulièrement bien appropriées pour leur utilisation dans des mécanismes à variateur de vitesse, une courroie selon la seconde série de réalisation peut avantageusement, en outre, trouver application dans des dispositifs d'embrayage où l'on exige du patinage, c'est-à-dire un certain glissement l'un contre l'autre sans produire d'entraînement des flancs latéraux de la courroie et des flasques des poulies.

D'autres caractéristiques et avantages de l'invention apparaîtront de la description qui suit, faite à titre d'exemple et en référence au dessin annexé dans lequel :

- la Figure 1 est une vue en coupe transversale d'une courroie trapézoïdale connue, la coupe étant effectuée au droit d'un élément transversal ;
- les Figures 1a et 1b sont des diagrammes ;
- les Figures 2 à 5a montrent schématiquement, des éléments transversaux ou plaquettes de courroie selon l'invention pour différentes formes d'une première série de réalisations ;
- la Figure 6 est une vue analogue aux Figures 2 à 5 mais pour une autre forme de réalisation ;
- la Figure 7 est une vue en coupe selon la ligne 7-7 de la Figure 6 ;
- les Figures 7a et 7b sont des vues analogues à celle de la Figure 7 mais pour des variantes de réalisations ;

- la Figure 8 est une vue analogue à celle de la Figure 1 mais pour une courroie selon l'invention et une troisième série de réalisations ;

- la Figure 9 est une vue partielle en coupe selon la ligne 9-9 de la Figure 8.

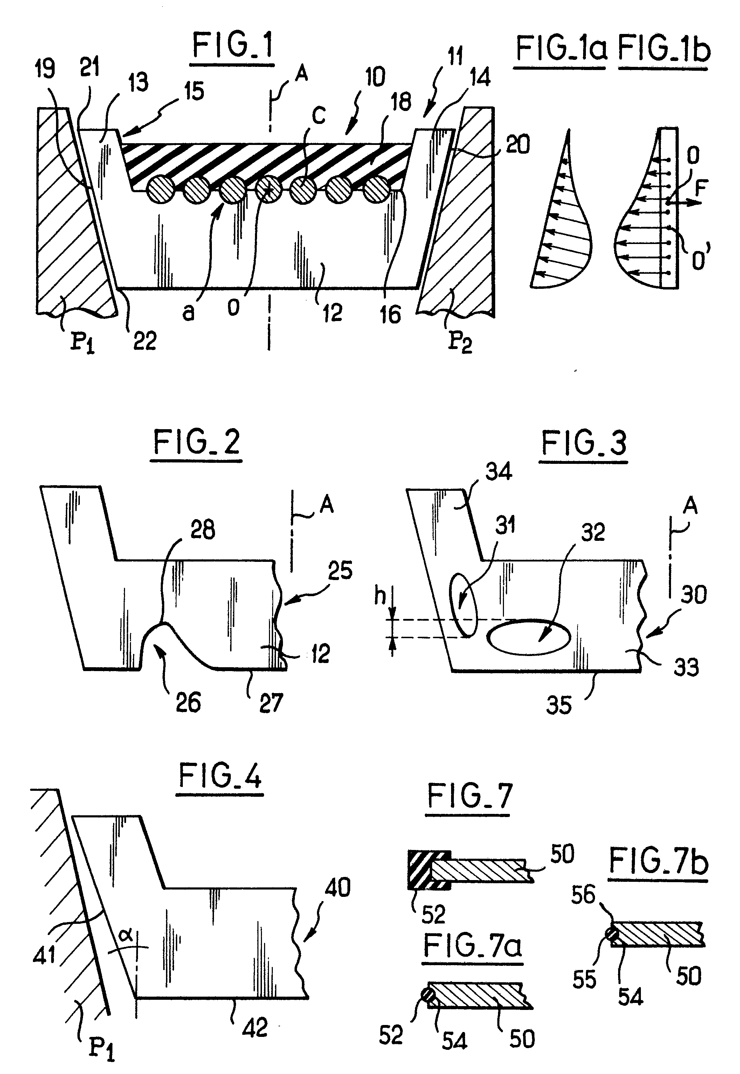

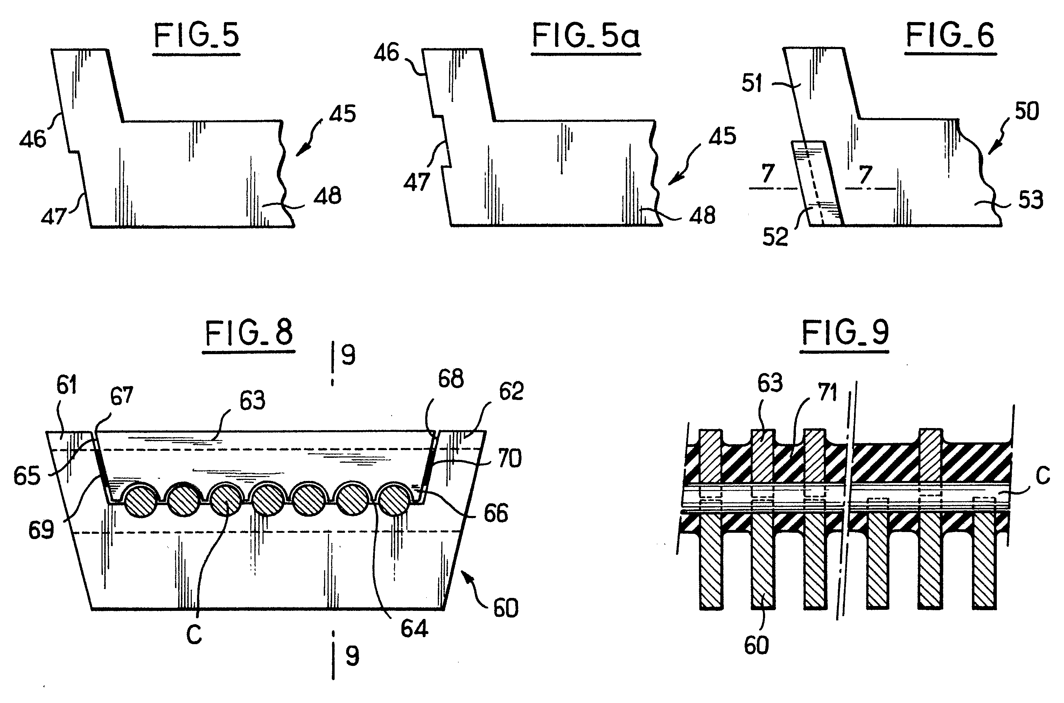

On se réfère d'abord aux Figures 1, 1a et 1b qui illustrent une courroie trapézoïdale plus particulièrement destinée à équiper des variateurs de vitesse à poulies à gorge pour transmettre le mouvement par contact et pression dans la gorge desdites poulies. La courroie 10 se compose d'une pluralité d'éléments transversaux ou plaquettes 11, de forme générale trapézoïdale, de préférence en métal de grande dureté, en matière synthétique rigide ou en tout autre matériau présentant une bonne résistance à la compression et qui sont chacune, comme visible sur la Figure 1, conformée suivant une base 12 et des ailettes 13 et 14 inclinées sur l'axe de symétrie A d'un angle d'environ 11°. Entre les ailettes 13 et 14 d'une part, et l'embase 12, d'autre part, est ménagé un logement 15 dont le fond 16 reçoit une pluralité de câbles C, de préférence en acier mais qui peuvent également être réalisés en fibres de verre ou en fibres synthétiques présentant une grande résistance à l'usure et dont l'ensemble forme l'armature longitudinale a de la courroie trapézoïdale. La nappe de câbles C, sensiblement confondue avec la fibre neutre de la courroie, transmet les efforts de traction que l'on peut considérer, du point de vue mécanique, comme appliqués au centre O formant l'intersection de l'axe A d'une plaquette et de la nappe de câbles. Les éléments transversaux ou plaquettes 11 sont solidarisés entre eux et à l'armature longitudinale a par une masse d'élastomère 18 qui remplit partiellement les logements 15 et les espaces séparant les éléments transversaux consécutifs dans le sens longitudinal de la courroie, Figure 9. Dans sa condition d'utilisation la courroie 10 coopère avec les flasques $p_1$ et $p_2$ d'une poulie à gorges, lesquels exercent des efforts de compression latéraux qui engendrent sur les flancs 19 et 20 des plaquettes 11 des réactions d'appui d'inégales valeurs entre l'extrémité externe 21 et l'extrémité interne 22 des flancs 19 et 20, en raison de la plus grande possibilité de déformation des ailettes 13 et 14 par rapport au corps ou base 12 d'une plaquette, les réactions d'appui d'un flasque sur une plaquette étant comme montrées sur la Figure 1a, c'est-à-dire avec une distribution dissymétrique, relativement faibles en regard des ailettes et plus fortes en regard du corps. Etant donné que les forces d'entraînement de la courroie dépendent des forces de friction latérales sur les flancs 19 et 20 des plaquettes, et que ces dernières sont elles-mêmes proportionnelles aux forces de réaction d'appui, il en résulte que les forces d'entraînement présentent elles aussi une distribution dissymétrique, comme montré sur la Figure 1b, qui illustre en vue de profil, la répartition des forces de friction f sur une plaquette et la résultante F de l'effort de traction des câbles appliquée au point O. La résultante des forces de friction étant appliquée au point O', distant du point O les plaquettes sont soumises à un moment de renversement qui tend à les déplacer avec pour conséquence une diminution de la durée de vie de la courroie.

Pour pallier cet inconvénient, l'invention propose de constituer la courroie à l'aide de plaquettes, qui dans une première série de réalisations, sont conformées pour rendre nulle ou sensiblement nulle la distance O-O', c'est-à-dire rapprocher jusqu'à tenter de les confondre la fibre neutre des efforts de friction et la fibre neutre de la courroie, sensiblement confondue avec celle de la nappe de câbles.

Dans un premier mode d'exécution montré sur la Figure 2, le corps 12 de chaque plaquette est découpé symétriquement de part et d'autre de l'axe A suivant une encoche 26 ouverte sur le bord intérieur 27 de la plaquette et dirigée quelque peu suivant la direction des ailettes 13 et 14, avec un apex 28 arrondi. Une telle encoche, qui interrompt la continuité des fibres métalliques dans la direction longitudinale du bord 27 et qui rend plus facilement déformable la base de la plaquette sous l'effet des efforts de compression latéraux exercés par les flasques des poulies, permet de s'affranchir d'une partie des inconvénients des courries connues et, notamment, d'en améliorer la durée de vie par un facteur considérable.

Dans un second mode d'exécution, Figure 3, chaque plaquette 30 est percée de boutonières 31 et 32 dont la première reigne principalement dans la zone de raccordement du corps 33 de la plaquette 30 et d'une ailette 34, en étant dirigée suivant la direction de ladite ailette, tandis que la seconde reigne suivant la direction longitudinale du bord intérieur 35 de la plaquette, dans le corps 33, et de manière que les contours apparents des deux boutonnières se chevauchent quelque peu, en projection sur la direction de l'axe A, comme montré en h. Dans ce mode d'exécution, également, et comme indiqué ci-dessus en référence à la Figure 2, la structure de la plaquette 30 est symétrique par rapport à l'axe A, c'est-à-dire que la plaquette 30 comporte en fait quatre boutonnières symétriques deux à deux par rapport audit axe.

Dans le mode d'exécution montré sur la Figure 4, les flancs 41 de chaque plaquette 40 sont inclinés sur le bord intérieur 42 suivant un angle α qui est légèrement supérieur à l'angle des flasques $p_1$ et $p_2$ des poulies. Ainsi, si l'angle des flasques est de 11°, l'angle α a une valeur de l'ordre de 11,2°-11,3°.

Dans le mode d'exécution montré sur la Figure 5, lui aussi bien entendu symétrique par rapport à l'axe A, le flanc 46 de chaque plaquette 45 est découpé suivant une feuillure 47 qui reigne sur environ la plus grande partie de la hauteur du corps 48 de la plaquette.

En variante, la feuillure 47 est ménagée au pied de la plaquette ou, encore, au niveau de la nappe de câbles, Figure 5a.

Dans une seconde série de réalisations, on prévoit de rapporter sur chaque plaquette des moyens permettant de mieux répartir les efforts de compression et, le cas échéant de diminuer localement les efforts de friction.

Dans un premier mode d'exécution, Figures 6 et 7, les deux flancs 51 d'une plaquette 50 sont munis d'une garniture 52 en matériau souple. Celle-ci peut reigner sur la totalité des flancs 51 ou, en variante, sur une partie seulement desdits flancs, avantageusement en regard du corps 53 de la plaquette. La garniture 52 peut être rapportée sur les flancs de la plaquette 50 par chevauchement, dans le cas d'une section droite en U, Figure 7, on peut être logée dans une creusure 54 du flanc, Figure 7a. La garniture peut également être en un matériau souple d'une seule pièce, ou, en variante, Figure 7b, constituée par un jonc 55 armé d'un fil en matériau résistant 56 comme de l'acier, l'ensemble étant logé dans la creusure 54 des flancs de la plaquette 50, Figure 7b.

L'invention envisage, dans son cadre, de combiner entre eux certains des modes d'exécution décrits ci-dessus et elle envisage aussi, dans une troisième série de réalisations, Figures 8 et 9, de compenser la tendance à la flexion des ailettes 61 et 62 d'une plaquette 60 en disposant entre lesdites ailettes une entretoise 63. Cette dernière est avantageusement réalisée en le même matériau que celui constitutif de la plaquette, et, de forme générale trapézoidale, est découpée sur son bord, intérieur 64 en correspondance des câblés C qu'elle chevauche. La fixation de l'entretoise 63 à la plaquette 60 peut être réalisée par soudure sur les flancs 65 et 66 de l'entretoise et les bords internes 67 et 68, respectivement, des ailettes 61 et 62 comme montré en 69 et 70. La soudure peut être effectuée par décharge de condensateur ou tout autre moyen approprié.

Dans une telle réalisation, les entretoises comme 63 peuvent, en outre, assurer le coincement mécanique des câbles C, soit à titre principal, soit à titre complémentaire des moyens d'arretoire connus.

Bien que l'invention prévoie d'associer une entretoise comme 63 à chaque plaquette 60, comme montré sur la partie gauche de la Figure 9, elle prévoit également, en variante, de n'associer une telle entretoise qu'à certaines seulement des plaquettes de la courroie, comme montré sur la partie droite de ladite Figure 9 qui illustre également, la répartition de la masse d'élastomère 71 solidarisant entre eux et à l'armature les éléments transversaux ou plaquettes de la courroie.

De bons résultats ont été obtenus, notamment en ce qui concerne la durée de vie, à l'aide de plaquettes en acier d'une hauteur totale comprise entre 12 et 16 mm, d'une longueur d'environ 24 mm, d'une largeur du corps d'environ 8 mm et avec une armature en câblés d'acier de 1 à 1,2mm d'épaisseur.

**Revendications**

1. Courroie sans fin comportant une armature longitudinale (a) constituée par un organe résistant à la tension ou une pluralité de tels organes comme des câbles (C) notamment en métal, en fibres de verre ou en tout matériau synthétique présentant une forte résistance à la tension, des éléments transversaux (25, 30, 40, 45...) de forme générale trapézoidale présentant une base (12, 33, 48...) et deux ailettes latérales (34, 61...) inclinées sur ladite base avec une masse d'élastomère (71) qui solidatise lesdits éléments transversaux entre eux et avec l'armature longitudinale, caractérisée en ce que les éléments transversaux (25, 30, 40, 45...) sont conformés ou sont munis de moyens (63) tels que, en fonctionnement, la résultante des forces de réaction d'appui des flasques de poulies ($p_1$, $p_2$) sur lesdits éléments transversaux (25, 30, 40, 45...) soit très proche de la ligne moyenne de transmission d'effort de l'armature longitudinale (a) qui constitue sensiblement la fibre neutre de la courroie.

2. Courroie selon la Revendication 1, caractérisée en ce que la base (12, 33, 48,...) de chaque plaquette (25, 30, 40, 45,...) est découpée et/ou conformée pour rapprocher sa déformabilité de celle des ailettes de la plaquette.

3. Courroie selon la Revendication 2, caractérisée en ce que la base (12) de chaque plaquette (25) est découpée suivant une encoche (26) ouverte sur son bord intérieur (27).

Courroie selon la Revendication 2, caractérisée en ce que la base (33) de chaque plaquette est munie de boutonnières (31, 32) dont l'une est dirigée sensiblement suivant la direction d'une ailette (34) et dont l'autre est dirigée sensiblement parallèlement au bord intérieur (35) de la plaquette (30), les deux dites boutonnière ayant des contours qui se chevauchent en projection sur la direction de l'axe (A) de la plaquette.

5. Courroie selon la Revendication 2, caractérisée en ce que l'angle des flancs (41) latéraux et du bord intérieur (42) de chaque plaquette (40) est légèrement supérieur à l'angle d'inclinaison des flasques ($p_1$, $p_2$) des poulies.

6. Courroie selon la Revendication 2, caractérisée en ce que les flancs (46) de chaque plaquette présentent une feuillure (47) qui règne sur une partie seulement de la hauteur desdits flancs (46).

7. Courroie selon la Revendication 6, caractérisée en ce que le feuillure (47) règne au moins en pied de plaquette (45).

8. Courroie selon la Revendication 6, caractérisée en ce que la feuillure (47) règne sur chaque flanc (46) au niveau de la nappe de câblés (Figure 5a).

9. Courroie selon la Revendication 1, caractérisée en ce que chaque plaquette est munie sur ses flancs (51) d'un moyen comme une garniture (52) en matériau souple ou analogue permettant de mieux répartir les efforts de compression en fonctionnement et, le cas échéant, de diminuer localement les efforts de friction.

10. Courroie selon la Revendication 9, caractérisée en ce que ladite garniture a une section droite en U et est fixée sur les flancs (51) de la plaquette (54) par chevauchement.

11. Courroie selon la Revendication 9, caractérisée en ce que la garniture en matériau souple est logée dans une creusure (54) des flancs (51) de la plaquette (50).

12. Courroie selon la Revendication 11, caractérisée en ce que la garniture est un jonc en matériau souple (55) comportant une armature en une matière résistante (56), comme un fil d'acier ou analogue.

13. Courroie selon la Revendication 1, caractérisée en ce qu'au moins certaines des plaquettes (60) sont munies d'un moyen d'entretoise (63) disposé entre les ailettes (61,62) et fixé à celles-ci, avantageusement par soudure ou analogue (69, 70).

14. Courroie selon la Revendication 13, caractérisée en ce que les moyens d'entretoises (63) sont conformés et positionnées de manière telle qu'ils assurant complémentairement l'immobilisation mécanique des câbles (C) de la courroie par coincement.

FIG_1  FIG_1a  FIG_1b

FIG_2

FIG_3

FIG_4

FIG_7

FIG_7b

FIG_7a

FIG_6

FIG_5a

FIG_5

FIG_9

FIG_8

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | DE-A-1 960 350 (VOLKSWAGENWERK) --- | | F 16 G 5/16 |
| A | GB-A-2 030 263 (VARITRAC) --- | | |
| A,D | FR-A-2 452 035 (DAVID) --- | | |
| A,P | EP-A-0 242 263 (HUTCHINSON) ------ | | |

**DOMAINES TECHNIQUES RECHERCHES (Int. Cl.4)**

F 16 G

**Le présent rapport a été établi pour toutes les revendications**

| Lieu de la recherche | Date d'achèvement de la recherche | Examinateur |
|---|---|---|
| LA HAYE | 21-11-1988 | BARON C. |

EPO FORM 1503 03.82 (P0402)